# EUROPÄISCHE PATENTSCHRIFT

(11) **EP 1 615 982 B1**
(45) Veröffentlichungstag und Bekanntmachung des Hinweises auf die Patenterteilung: **29.06.2011**
(21) Anmeldenummer: 04725120.2
(22) Anmeldetag: 01.04.2004
(51) Int. Cl.: C09K 15/00, C09D 7/12

(54) **HOCHKONZENTRIERTE, LAGERSTABILE WÄSSRIGE DISPERSIONEN ZUR STABILISIERUNG VON LACKEN UND LASUREN**
HIGHLY CONCENTRATED, STORAGE STABLE AQUEOUS DISPERSIONS FOR STABILISING COATINGS AND GLAZES
DISPERSIONS AQUEUSES TRES CONCENTREES ET STABLES AU STOCKAGE POUR STABILISER DES PEINTURES ET DES GLACIS

(30) Priorität: 07.04.2003 EP 03007900
(43) Veröffentlichungstag der Anmeldung: 18.01.2006
(73) Patentinhaber: Clariant Finance (BVI) Limited, Road Town, Tortola (VG)
(72) Erfinder: BECHTOLD, Karl, 79639 Grenzach-Wyhlen (DE)
(74) Vertreter: Mikulecky, Klaus
(86) Internationale Anmeldenummer: PCT/IB2004/001172
(87) Internationale Veröffentlichungsnummer: WO 2004/090069

(56) Entgegenhaltungen:
- WO-A-99/48997
- DE-A- 3 511 924
- DE-A- 19 946 519
- GB-A- 2 187 746
- US-A- 5 030 670
- US-A- 5 772 920

## Beschreibung

Öffentliche Meinung und Gesetzgebung stellen an die Verarbeiter von Lacken in zunehmendem Masse die Forderung, die Emissionen von Lösemitteln zu verringern. Diese Auflagen werden mit der erhöhten Umweltbelastung einerseits und den arbeitshygienischen Gegebenheiten andererseits begründet. Wässrige Beschichtungsstoffe haben sich in den letzten Jahren eine stetig wachsende Position im Markt erobert. Die kataphoretische Tauchgrundierung und der Wasserfüller sind inzwischen Stand der Technik bei der Lackierung von Personenwagen. Wasserbasislacke haben in den letzten Jahren die Bandfreigabe erhalten und sogar Wasserklarlacke werden inzwischen bereits am Band eingesetzt. Selbst die Transportversiegelungen und Schutzwachse erfolgen heute schon auf wässriger Basis. Auch in den Bereichen der Beschich-tung von Anbauteilen aus Kunststoffen oder Metall, der Beschichtung von Land- und Baumaschinen, Büromöbeln, elektrischen oder elektronischen Geräten, Regalteilen, Leuchten usw. werden heute schon Wasserlacke eingesetzt.

Wasserbasierende Lacksysteme und Lasuren bei denen entweder wasserlösliche Bindemittel oder wasserverdünnbare Bindemittel oder eine Kombination aus wasserlöslichen und wasserverdünnbaren Bindemitteln eingesetzt werden, sind in der Regel nur mit von Natur aus flüssigen Stabilisatoren mischbar. Der grösste Teil der kommerziell erhältlichen Stabilisatoren jedoch ist fest, pulverförmig und in Wasser unlöslich bzw. schwerlöslich.

Flüssige Präparate, Lösungen oder Dispersionen, weisen gegenüber den Pulverformen zusätzlich eine Reihe von Vorteilen auf, wie beispielsweise keine Staubentwicklung bei der Handhabung, keine Benetzungsprobleme durch Klumpenbildung und nicht zuletzt eine leichte Dosierbarkeit in automatischen Anlagen. Die Haltbarkeit von Flüssigpräparationen ist jedoch bei der Lagerung über längere Zeiträume oft nur unbefriedigend und so ist oftmals die Bildung von Agglomeraten oder eines Sediments zu beobachten. Nicht hinreichend dispergierte Partikel sind oft die Ursache für häufig vorkommende Verstopfungen in automatisierten Dosier- und Mischsystemen.

Alle organischen Materialien, seien es natürliche oder synthetische, müssen normalerweise gegen den Abbau durch Umwelteinflüsse und UV-Licht durch Zugabe von Stabilisatoren, insbesondere durch die Zugabe von Lichtschutzmitteln und Antioxidantien geschützt werden.

Wässrige Dispersionen von Lichtschutzmitteln, insbesondere von UV-Absorbern, sind schon seit längerem bekannt. Ihre Verwendung ist hauptsächlich beim Färben von Synthesefasern insbesondere Polyesterfasern oder säuremodifizierten Polyesterfasern Stand der Technik. Die Konzentrationen der in den entsprechenden Handelsformen vorliegenden Aktivkomponenten liegt meist im Bereich von deutlich unter 40 Gewichtsprozent. Daneben zeigt sich häufig, dass die Lagerstabilität der Dispersion nicht ausreichend ist, was sich durch Sedimentation der Aktivstoffe bemerkbar macht.

EP 225287 beschreibt Präparationen für Färbebäder bei denen als weitere Zusätze zur Stabilisierbarkeit elektrolytempfindliche Verdickungsmittel enthalten um einen bestimmten Viskositätsbereich einhalten zu können.

EP 345219 beschreibt wässrige Dispersionen von 2-(2'-Hydroxyphenyl-)benzotriazolen zur Verbesserung der Lichtechtheit von Färbungen auf Synthesefasern. Als Zusatz wird ein saurer Ester oder dessen Salz eines Alkylenoxidadduktes gefordert.

EP 354174 beschreibt wässrige Zusammensetzungen von 2-(2'-Hydroxyphenyl-)-benzotriazolen zur Verbesserung der Lichtechtheit von Färbungen auf synthetischen Fasermaterialien insbesondere Polyesterfasern oder säuremodifizierten Polyesterfasern. Die Präparationen enthalten als weitere Komponente ein Kondensationprodukt einer nicht etherverbrückten aromatischen Sulfonsäure und Formaldehyd.

EP 468921 beschreibt die Darstellung einer wässrigen Zubereitung von o-Hydroxyphenyl-triazinen zur Verbesserung der Lichtechtheit von Färbungen auf synthetischen Fasermaterialien insbesondere Polyesterfasern.

EP 474595 beschreibt wässrige Dispersionen von speziell substituierten 2-(2'-Hydroxyphenyl)-benzotriazolen alleine oder in einem Gemisch mit einem Benzophenon zur Verwendung beim Färben von synthetischen Fasermaterialien insbesondere Polyesterfasern oder säuremodifizierten Polyesterfasern.

EP 490819 beschreibt die wässrige Präparation eines Gemisches aus einer Benzotriazol-verbindung und einer 2-Hydroxybenzophenonverbindung zur Verwendung beim Färben von synthetischen Fasermaterialien insbesondere Polyesterfasern oder säuremodifizierten Polyesterfasern.

EP 820978 beschreibt die Behandlung von Textilmaterialien zur Verbesserung der Lichtstabilität mit wässrigen Zubereitungen von 2-Hydroxybenzophenonverbindungen.

DE-OS 3511924 beschreibt wässrige Zubereitungen sterisch gehinderter Amin-Lichtschutzmittel (HALS) für den Einsatz im Lackbereich die im allgemeinen 5 bis 50 Gew.%, vorzugsweise 15 bis 40 Gew.% HALS und 2 bis 30 Gew.%, vorzugsweise 3 bis 20 Gew.% eines nichtionischen Dispergators enthalten. Der beispielhaft verwendete Aktivstoffgehalt beträgt 32 Gew.%.
Die nach dieser Offenlegungsschrift hergestellten Dispersionen, insbesondere solche mit höheren Aktivstoffgehalten sind jedoch nicht ausreichend lagerstabil um eine längere Lagerzeit ohne Qualitätseinbussen zu gewährleisten.

GB 2 187 746 offenbart stabile wässrige Dispersionen von 2-(2'-hydroxyphenyl)-benztriazolen (UV-Absorber) mit einem Aktivstoffgehalt von 20 bis 45 Gew.% und 7 bis 15 Gew.% eines nicht-ionischen Dispergators. Die Partikelgrösse des UV-Absorbers ist bevorzugt <1µm. Die beispielhaft verwendeten Aktivstoffgehalte betragen 40 Gew.%.

DE-OS 19946519 offenbart sehr allgemein wässrige Dispersionen zur Stabilisierung von Kunststoffdispersionen, sowie ein Verfahren zu deren Herstellung. Der Aktivstoffeghalt (phenolisches Antioxidants) ist von 0,1 bis 59,9 Gew.% definiert, der Anteil an Grenzflächenaktiven Substanzen zur Dispergierung von 0,5 bis 15 Gew.%.

Die Aufgabe der vorliegenden Erfindung war es die Lagerstabilität von hochkonzentrierten wässrigen Dispersionen eines Lichtschutzmittels oder eines Gemisches eines Lichtschutzmittels und eines Antioxidants zu verbessern.

Die Aufgabe wird erfindungsgemäss gelöst durch wässrige Dispersionen eines Lichtschutzmittels oder eines Gemisches eines Lichtschutzmittels und eines
Antioxidants, dadurch gekennzeichnet, dass sie einen Aktivstoffgehalt von mehr als 47 Gew.% aufweisen und zumindest ein nichtionisches Netzmittel als Dispergator und ein Polyglykol als Lösungsvermittler, sowie 0,2 bis 5 Gew.% Ölsäure als Fliessverbesserer enthalten.

Die Aufgabe wird weiter auch von einem Verfahren zur Stabilisierung wässriger Dispersionen unter Verwendung der oben genannten Komponenten gelöst.

Gegenstand der vorliegenden Erfindung sind Dispersionen einzelner oder in Gemischen vorliegender Lichtschutzmittel und Antioxidantien und ihre Verwendung bei der Stabilisierung von Lacken und Lasuren, insbesondere von wasserbasierenden Basislacken, Klarlacken und Lasuren. Die Erfindung betrifft insbesondere lagerstabile wässrige Präparationen von in Wasser schwerlöslichen bis unlöslichen Feststoffen, die als Lichtschutzmittel oder Antioxydantien eingesetzt werden, mit einer Teilchengrösse D₅₀ kleiner als 5µm zur Stabilisierung wasserbasierender Lacksysteme und Lasuren. Bevorzugt weisen die Aktivstoffe eine Partikelgrösse von D₅₀ = 0,5-2 µm und D₉₀ < 3,5 µm auf.

Die Erfindung ist dadurch gekennzeichnet, dass die hochkonzentrierten, lagerstabilen wässrigen Dispersionen einen Aktivstoffgehalt von mehr als 47 Gew.%, bevorzugt 47-57 Gew.%, besonders bevorzugt 47-54 Gew.% und ganz besonders bevorzugt von mehr als 50 und bis zu 54 Gew.% aufweisen.

Die erfindungsgemässen hochkonzentrierten, wässrigen Dispersionen enthalten 0.2 - 5.0 Gew.% Ölsäure als Fliessverbesserer, damit eine entsprechende Viskosität ohne zu grosse Verdünnung gewahrt bleibt. Bevorzugt werden Mengen von 0.2 - 4.0 Gew.% und besonders bevorzugt von 0.2 - 3.0 Gew.% eingesetzt.

Die wässrigen Dispersionen weisen bevorzugt eine Viskosität von 0,01 bis 2 Pa s auf.

Bevorzugt enthalten die erfindungsgemässen hochkonzentrierten, wässrigen Dispersionen neben nichtionischen Netzmittel auch ein anionisches Netzmittel, was eine optimale Dispergierung der Aktivstoffe erlaubt und damit eine verbesserte Lagerstabilität gewährt.

Das Lichtschutzmittel oder das Gemisch eines Lichtschutzmittels und eines Antioxidants gemäss der Erfindung sollte einen Schmelzpunkt von mindestens 35°C aufweisen, damit sie bei der Verarbeitung zu wässrigen Dispersionen, die häufig bei erhöhter Temperatur stattfindet, nicht schmelzen.

Bevorzugte Lichtschutzmittel sind die Produkte mit den Formeln I bis VIII 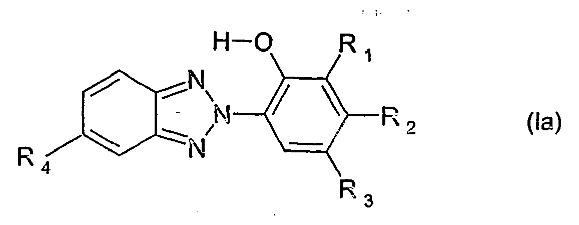 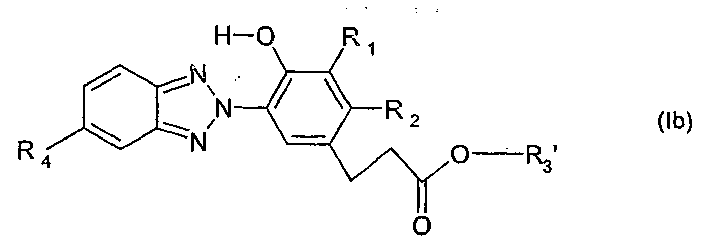 (feste Produkte wie beispielsweise in US 4853471 beschrieben) 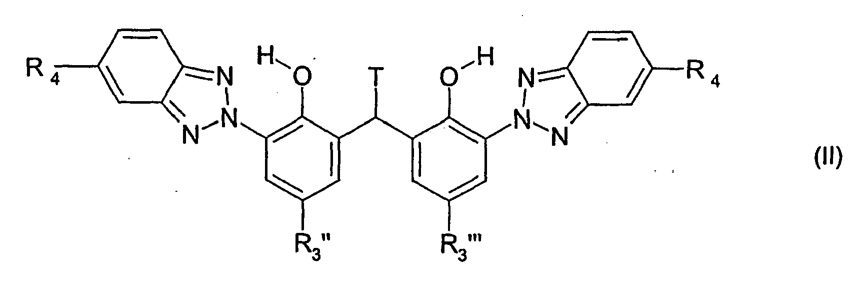 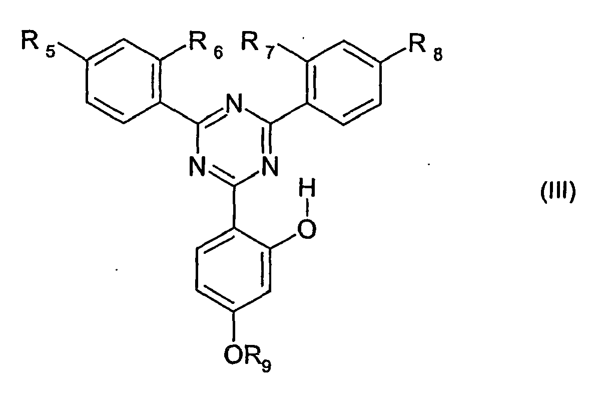 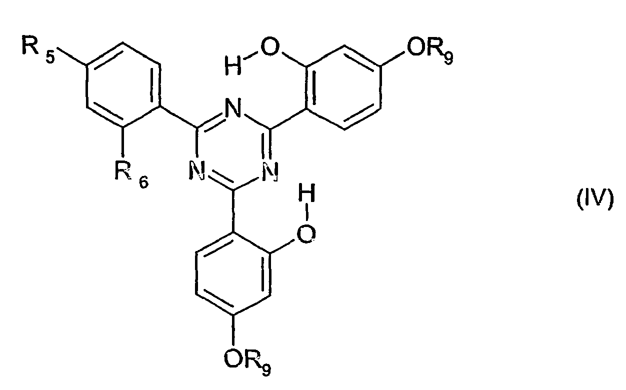 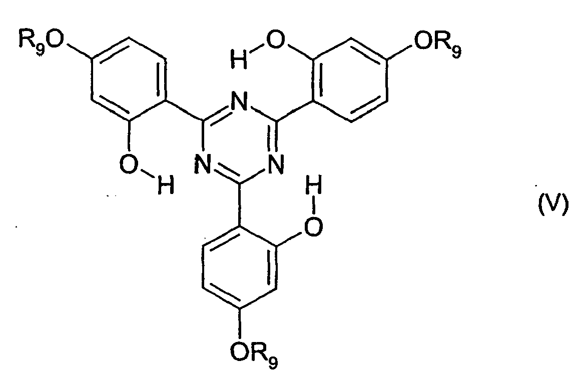 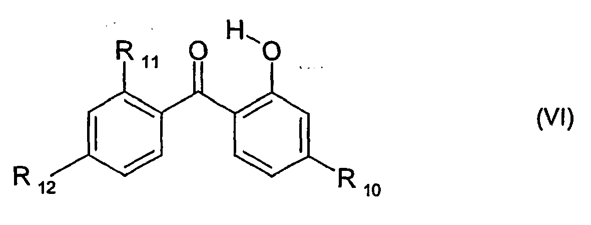 (wie beispielsweise in EP 820 978 A1 beschrieben) 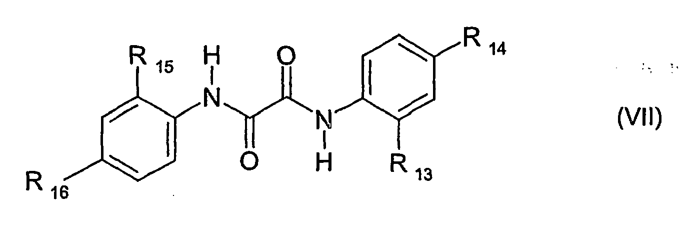 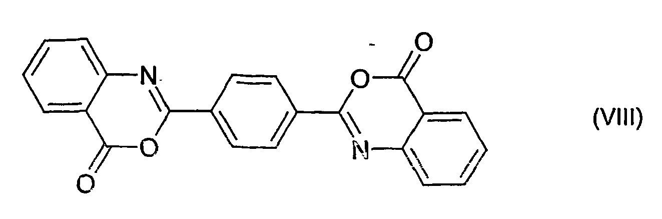 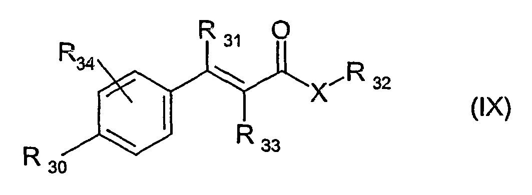 worin
- R₃₀: H, n-Alkyl, iso-Alkyl, unsubstituiertes oder substituiertes Aryl, OR₃₅, oder ein Strukturteil 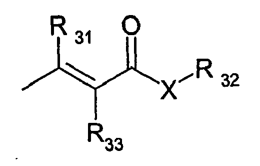 mit R₃₅ H, n-Alkyl, iso-Alkyl, unsubstituiertes oder substituiertes Aryl,
- R₃₁: H, n-Alkyl, iso-Alkyl oder ein Strukturteil

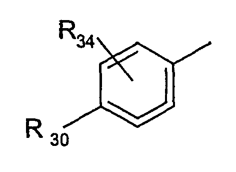

- X: -O- oder -(NR₃₆)- mit R₃₆ = H, n-Alkyl, iso-Alkyl

- R₃₃: = H, n-Alkyl, iso-Alkyl, CN oder eine Gruppe

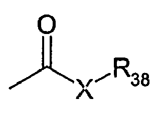

- ist, wobei X wie oben: beschrieben und
- R₃₂ und R₃₈: unabhängig voneinander die folgenden Bedeutungen haben: H, n-Alkyl, iso-Alkyl, unsubst. und subst. Aryl, oder ein Strukturteil 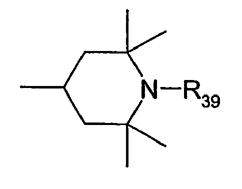 mit R₃₉ = H oder C₁-C₁₈-Alkyl, C₇-C₁₈-Alkylaryl, -O-C₁-C₁₈-Alkyl oder Acetyl bedeuten.

Die Symbole R₁ bis R₁₆ haben die folgenden Bedeutungen:
R₁, R₂ und R₃ unabhängig voneinander Wasserstoff, lineares oder verzweigtes C₁-C₁₂ Alkyl, Cycloalkyl, Aralkyl; bevorzugt Methyl, sec-Butyl, tert-Butyl, tert-Amyl, tert-Octyl,
Cyclohexyl oder eine Gruppe 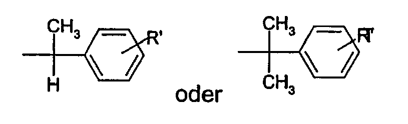 worin R' für Wasser-stoff oder C₁-C₁₂ Alkyl steht.
R₄ Wasserstoff, Halogen wie Cl oder Br, Carboxy oder eine Sulfonsäure Gruppe, lineares oder verzweigtes C₁-C₁₂ Alkyl, Cycloalkyl oder niedriges Alkoxy;
R₃' , R₃" und R₃" unabhängig voneinander Wasserstoff, lineares oder verzweigtes C₁-C₁₂Alkyl, Cycloalkyl, Aralkyl;
T Wasserstoff, C₁-C₁₂Alkyl oder eine Oxogruppe;
R₅, R₆, R₇ und R₈ unabhängig voneinander Wasserstoff, lineares oder verzweigtes C₁-C₈ Alkyl, unsubstituiertes oder mit niederem Alkyl substituiertes Aryl;
R₉ Wasserstoff oder eine lineare oder verzweigte, aliphatische oder cycloaliphatische Alkyl-Gruppe mit C₁-C₁₂ welche gegebenenfalls durch eine oder mehrere OH-Gruppen oder eine oder mehrere Alkoxy-Gruppen oder gemischt durch OH- und Alkoxy-Gruppen substituiert sein kann.
   - R₁₀: OH, Alkoxy mit C₁-C₁₂, Hydroxyethoxy oder eine Gruppe 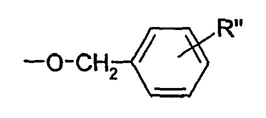 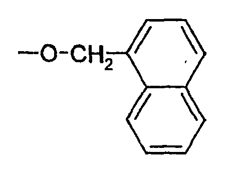 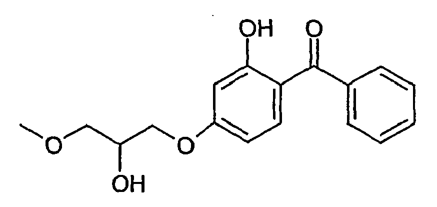 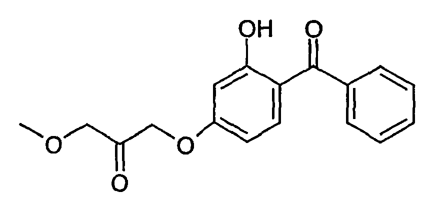 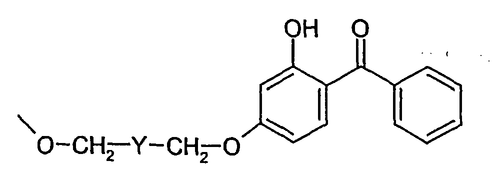
   worin Y eine direkte Bindung oder eine Gruppe 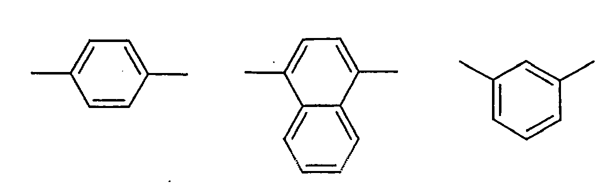 und worin R" Wasserstoff, Methyl oder Methoxy ist,
R₁₁ Wasserstoff, Halogen, Cyan, C₁-C₈ Alkyl, Cycloalkyl, Alkoxy, Phenoxy, Phenyl, Hydroxy oder Hydroxyethoxy;
R₁₂ Wasserstoff, Halogen, Cyan, C₁-C₈ Alkyl, Cycloalkyl, Alkoxy, Phenoxy, Phenyl, Hydroxy oder Hydroxyethoxy oder eine Gruppe 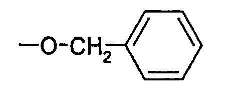
R₁₃, R₁₄, R₁₅ und R₁₆ gleich oder unabhängig voneinander Wasserstoff, lineares oder verzweigtes Alkyl, OH, Alkoxy.

Die sterisch gehinderte Piperidinderivate (HA(L)S) welche gemäss der Erfindung zum Einsatz gelangen, gehören der gut bekannten Gruppe von Stabilisatoren an, die bereits für die Verbesserung der Lichhtechtheit oder der mechanischen Eigenschaften verwendet werden. Solche sterisch gehinderte Piperidinderivate sind z.B. solche der Formeln (IXa) - (IXc) 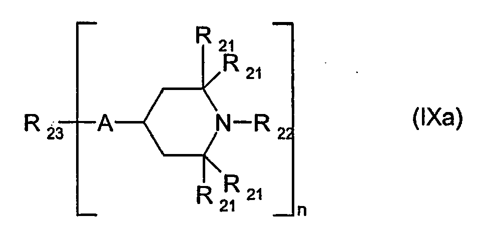 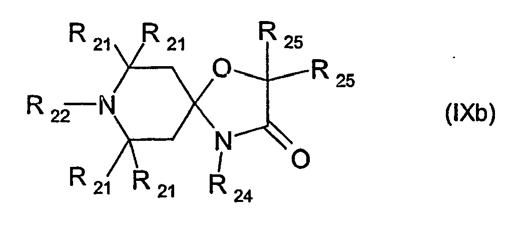 Reaktionsproducte von 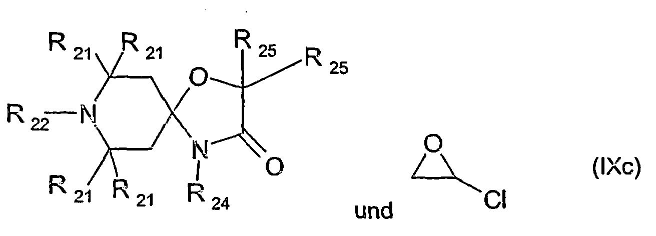 worin, unabhängig von einander,
- A: -O- oder -NR₂₀-,
- R₂₀: H, C₁-C₁₈-Alkyl oder eine der Gruppen

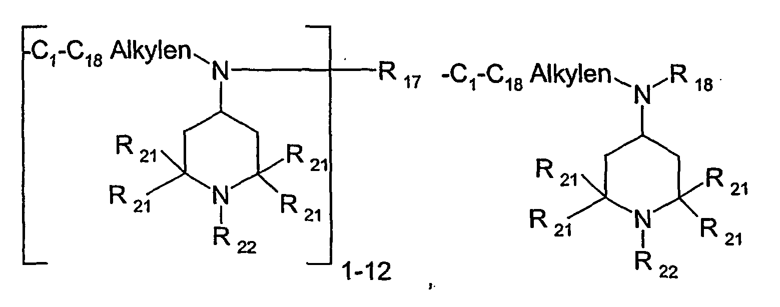

- R₁₇: H, C₁-C₁₈-Alkyl,
- R₁₈: H, einen aliphatischen, cycloaliphatischen, aromatischen oder heteroaromatischen Rest,
- R₂₁: C₁-C₁₈-Alkyl,
oder jeweils zwei an dem gemeinsamen Kohlenstoffatom gebundene R₂₁ einen C₄-C₈-Cycloalkyl Rest,
R₂₂ H oder C₁-C₁₈-Alkyl, C₇-C₁₈-Alkylaryl,
R₂₃ H, einen n-wertigen aliphatischen, cycloaliphatischen, aromatischen oder hetero- aromatischen Rest,
R₂₄ C₁-C₁₈-Alkyl oder -C(O)-C₁-C₁₈-Alkyl;
R₂₅ H, C₁-C₁₈-Alkyl, C₄-C₁₈-Cycloalkyl oder jeweils zwei an dem gleichen Kohlen- stoffatom gebundene R₅ einen C₄-C₁₈-Cycloalkyl Rest,
n eine ganze Zahl > 0 bedeuten.

Als weiteres Additiv können die folgenden Antioxydantien in den erfindüngsgemässen Dispersionen enthalten sein:
1.1 Alkylierte Monophenole, z.B. 2,6-Di-tert-butyl-4-methylphenol, 2-butyl-4,6-dimethylphenol, 2,6-Di -tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 24a-Methyl-cyclohexyl)-4,6-dimethylphenol, 2,6-Di-octadecyl-4-methylphenol, 2,4.6-Tricyclo-hexylphenol, 2,6-Di-tert-butyl-4-methoxymethylphenol, 2,6-Di-nonyl-4-methylphenol, 2,4-Dimethyl-6-(1'-methyl-undec-I'-yl)-phenol, 2,4-Dimethyl-6-(1'-methyl-heptadecyl-phenol, 2,4-Dimethyl-6-(1'-methyl-tridec-I'-yl)-phenol und Mischungen davon.
1.2 Alkylthiomethylphenole, z.B. 2,4-Di-octylthiomethyl-6-tert-butylphenol, 2,4-Dioctyl-thiomethyl-6-methylphenol, 2,4-Di-octylthiomethyl-6-ethylphenol, 2,6-Di-dodecyl-thiomethyl-4-nonylphenol.
1.3 Hydrochinone und alkylierte Hydrochinone, z.B. 2,6-Di-tert-butyl-4-methoxyphenol, 2,5-Di-tert-butyl-hydrochinon, 2,5-DI-tert-amyl-hydrochinon, 2,6-Diphenyl-4-octa-decyloxyphenol, 2,6-Di-tert-butyl-hvdrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis-(3,5-di-tert-butyl-4-hydroxyphenyl)adipat.
1.4 Tocopherole, z.B. α-Tocopherol, β-Tocopherol, γ-Tocopherol, δ-Tocopherol und Mischungen davon (Vitamin E).
1.5 Hydroxylierte Thiodiphenylether, z.B. 2,2'-Thio-bis(6-tert-butyl-4-methylphenol), 2,2'-Thio-bis(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4'-Bis-(2,6-di-methyl-4-hydroxyphenyl)-disulfic.
1.6 Alkyliden-Bisphenole, z.B. 2,2'-Methylen-bis-(6-tert-butyl-4-methylphenol), 2,2'-Methylen-bis-(6-tert-butyl-4-ethylphenol), 2,2'-Methylen-bis-[4-methyl-6-(a-methyl-cyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert-butylphenol), 2,2'-Ethyli-den-bis-(4,6-di-tert-butylphenol), 2.2'-Ethyliden-bis-(6-tert-butyl-4-isobutylphenol), 2,2'-Methylen-bis-[6-(α-methylbenzyl)-4-nonylphenol], 2,2'-Methylen-bis-[6-(α,α-di-methylbenzyl)-4-nonylphenol], 4,4'-Methylen-bis-(2,6-di-tert-butylphenol), 4,4'-Methy-len-bis-(6-tert-bulyl-1-2-methylphenol), 1,1-Bis-(5-tert-butyl-4-hydroxy-2-methyl-phenyl)-butan, 2,6-Bis-(3-tert-butyl-5-methyl-2-hydroxybenzyl)-4-methylphenol, 1,1,3-Tris-(5-tert-butyl-4-hydroxy-2-methylphenyl)-butan, 1,1-Bis-(5-tert-butyl-4-hydroxy-2-methylphenyl)-3-n-dodecyl-mercaptobutan, Ethylenglycol-bis-[3,3-bis-'(3'-tert-butyl-4'-hydroxyphenyl)-butyrat], Bis-(3-tert-butyl-4-hydroxy-5-methyl-phenyl)-dicyclo-pentadien, Bis-[2-(3'-tert-butyl-2'-hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis-(3,5-di-tert-butyl-4-hydroxyphenyl)-propan, 2,2-Bis-(5-tert-butyl-4-hydroxy-2-methylphenyl)-4-n-dodecylmercaptobutan, 1,1,5,5-Tetra-(5-tert-butyl-4-hydroxy-2-methylphenyl)-pentan.
1.7 O-, N- und S-Benzylverbindungen, z.B. 3,5,3',5'-Tetra-tert-butyl-4,4'-dihydroxydibenzylether, Octadecyl-4-hydroxy-3.5-dimethylbenzyl-mercaptoacetat, Tris-(3,5-di-tert-butyl-4-hydroxybenzyl)-amin, Bis-(4-tert-butyl-3-hydroxy-2,6-dimethylbenzyl)-di-thioterephthalat, Bis-(3,5-di-tert-butyl-4-hydroxybenzyl)sulfid, Isooctyl-3,5-di-tert-butyl-4-hydroxybenzyl-mercaptoacetat.
1.8 Hydroxybenzylierte Malonate, z.B. Dioctadecyl-2,2-bis-(3,5-di-tert-butyl-2-hydrorybenzyl)-malonat, Di-octadecyl-2-(3-tert-butyl-4-hydroxy-5-methylbenzyl)-malonat, Didodecylmercaptoethyl-2,2-bis-(3,5-ditert-butyl-4-hydroxybenzyl)-malonat, Di[4(1,1,3,3-tetramethylbutyl)phenyl], 2,2-bis(3,5-di-tert-butyl-4-hydroxybenzyl)-malonat.
1.9 Hydroxybenzyl-Aromaten, z.B. 1,3,5-Tris-(3,5-di-tert-buty)-4-hydroxybenzyl)-2,4,6-trimethylbenzo1, 1,4-Bis-(3,5-di-tert-butyl-4-hydroxybenzyl)-2,3,5,6-tetramethylbenzot 2,4,6-Tris-(3,5-di-tert-buryl-4-hydroxybenzyl)-phenol.
1.10 Triazinverbindungen, z.B. 2,4-Bis-octylmercapto-6(3,5-di-tert-butyl-4-hydroxy-anilino)-1,3,5-triazin, 2-Octylmercapto-4,6-bis-(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris-(3,5-di-tert-butyl-4-hydroxyphenoxy)1,2,3-triazin, 1,3,5-Tris-(3,5-di-tert-butyl-4-hy-droxybenzyl)isocyanurat, 1,3,5-Tris(4-tert-butyl-3-hydroxy-2,6-dimethylbenzyl)-iso-cyanurat, 2,4,6-Tris(3,5-di-tert-butyl-4-hydroxyphenylethyl)-1,3,5-triazin, 1,3,5-Tris-(3,5-di-tert-butyl-4-hydroxyphenylpropionyl)hexahydro-1,3,5-triazin, 1,3,5-Tris(3,5-di-cyclohexyl-4-hydroxybenzyl)-isocyanurat.
1.11 Benzylphosphonate, z.B. Dimethyl-2,5-di-tert-butyl-4-hydroxybenzylphosphonat, Diethyl-3,5-di-tertbutyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzylphosphonsäure-monoethylesters.
1.12 Acylaminophenole, 4-Hydroxylaurinsäureamid, 4-Hydroxystearinsäureanilid, N-(3,5-di-tert-butyl-4-hydroxyphenyl)-carbaminsäureoctylester.
1.13 Ester der β-(3.5-Di-tert-butyl-4-hydroxyphenyl)-propionsäure mit ein- oder mehrwertigen Alkoholen, wie z.B. mit Methanol, Ethanol, Octanol, Octadecanol, 1,6-Hexan-diol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis-(hydroxyethyl)-oxalsäurediamid, 3-Thiaundecanol, 3-Thiapenta-decanol, Trimethylhexandiol, Trimethylolpropan, 4-Hydroxymethyl-1-phospha-2,6,7-trioxabicyclo[222]-octan.
1.14 Ester der β-(5-tert-Butyl-4-hydroxy-3-methylphenyl)-propionsäure mit ein- oder mehrwertigen Alkoholen, wie z.B. mit Methanol, Ethanol, Octanol, Octadecanol, 1,6-Hexandiol, 1.9-Nonandiol, Ethylenglycol, 12-Propandiol, Neopentylglycol, Thiodiethylenglycol, Diethylenglycol, Triethylenglycol, Pentaerythrit, Tris-(hydroxy)-ethyl-isocyanurat, N,N'-Bis(hydroxyethyl)-oxalsäurediamid, 3-Thiaundecanol, 3-Thia-pentadecanol, Trimethylhexandiol, Trimethylolpropan, 4-Hydroxymethyl-1-phospha-2,6,7-trioxabicyclo[2-22]octarn.
1.15 Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexan-diol, 1,9-Nonandiol, Ethylenglycol, 1,2-Propandiol, Neopentylglycol, Thiodiethylen-glycol, Diethylenglycol, Triethylenglycol, Pentaerythrit, Tris-(hydroxy)-ethyl-iso-cyanurat, N,N'-Bis-(hydroxyethyl)-oxalsäurediamid, 3 Thiaundecanol, 3-Thiapenta-decanol, Trimethyl hexandiol, Trimethylolpropan, 4-Hydroxymethyl-1-phospha-2,6,7-trioxabicyclo-[222]octan.
1.16 Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxy)ethyliso-cyanurat, N,N-Bis-(hydroxyethyl)-oxalsäurediamid, 3-Thiaundecanol, 3-Thia-pentadecanol, Trimethyl-hexandiol, Trimethylolpropan, 4-Hydroxymethyl-1-phospha-2,6,7-trioxabicyclo-[2-22]-octan.
1.17 Amide der β-(3,5-Di-tert-butyl-4-hydroxyphenyl)-propionsäure, wie z.B. N,N'-Bis-(3,5-di-tert-butyl4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.

Weitere Additive, die in den erfindungsgemässen Dispersionen enthalten sein können, sind:
2. Metalldesaktivatoren, wie z.B. N,N' -Diphenyloxalsäurediamid, N-Salicylal-N'-salicyloylhydrazin, N,N'-Bis-(salicyloyl)-hydrazin, N,N'-Bis-(3,5-di-tert-butyl-4-hydroxyphenylpropionyl)-hydrazin, 3-Salicyloylamino- 1,2,4-triazol, Bis-(benzyliden)-oxalsäuredihydrazid, Oxanilid, Isophthalsäure-dihydrazid, Sebacinsäurebis-phenylhydrazid, N,N'-Diacetyl-adipinsäure-dihydrazid, N,N'-Bis-salicyloyloxalsäure-dihydrazid, N,N'-Bis-salicyloyl-thiopropionsäure-dihydrazid.
3. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert-butylphenyl)-phosphit, Diisodecylpentaerythrit-diphosphit, Bis-(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis-(2,4-di-tert-butyl-6-methylphenyl)-penta-erythritdiphosphit, Bis-(2,4,6-tri-tert-butylphenyl)-pentaerythritdiphosphit, Tristearyl-sorbit-triphosphit, Tetrakis-(2,4-di-tert-butylphenyl)-4,4'-biphenylendiphosphonit, 6-Isooctyloxy-2,4,8,10-tetra-tert-butyl-12H-dibenz[d,g]-1,3,2-di-oxaphosphocin, 6-Fluor-2,4,8,10-tetra-tert-butyl-12-methyl-dibenz[d,g]-1,3,2-di-oxaphosphocin, Bis-(2,4-di-tert-butyl-6-methylphenyl)-methylphosphit, Bis-(2,4-di-tert-butyl-6-methyl-phenyl)-ethylphosphit.
4. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.
5. Polyamidstabilisatoren, wie z.B. Kupfersalze in Kombination mit Jodiden und/- oder Phosphorverbindungen und Salze des zweiwertigen Mangans.
6. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.
7. Nukleierungsmittel, wie z.B. 4-tert-Butylbenzoesäure, Adipinsäure, Diphenylessigsäure.
8. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Russ, Graphit.
9. Sonstige Zusätze. wie z.B. Weichmacher, Gleitmittel, Emulgatoren, Pigmente, optische Aufheller, Flammschutzmittel, Antistatika, Treibmittel.

Die erfindungsgemässen hochkonzentrierten, wässrigen Dispersionen haben eine Lagerstabilität von mehr als 4 Wochen bei 50°C, was erfahrungsgemäss einer Lagerung bei Raumtemperatur von über 1 Jahr entspricht.

In einer bevorzugten Ausführungsform enthalten die erfindungsgemässen wässrigen Dispersionen als weitere Komponente ein Biozid. Die Gegenwart eines Biozids erhöht die Lagerstabilität noch einmal erheblich, weil die Zersetzung (bzw. der teilweise Abbau) des Dispergators und/oder der Lichtschutzmittel durch Pilz- und/oder Bakterienbefall verhindert oder mindestens stark verlangsamt wird.

Biozide sind beispielsweise Verbindungen aus der Klasse der derivatisierten Isothiazolin-3-one. Diese werden in Form deren Lösungen, Emulsionen oder als synergistische Mischungen mit anderen Komponenten eingesetzt. Bevorzugt sind handelsüblich Biozide wie zum Beispiel die Handelsprodukte ACTICIDE^{®} der Firma Thor oder PARMETOL^{®} der Firma Schülke&Mayr.

Besonders bevorzugte wässrige Dispersionen gemäss der Erfindung haben einen Gehalt von 47-54 Gew.% Aktivstoff, 5-10 Gew.% Netzmittel, 5-10 Gew.% Lösungsvermittler, 0.2-3 Gew.% Ölsäure und < 1 Gew.% Biozide, in 30-40 Gew.% Wasser.

Die erfindungsgemässen Stabilisator-Präparationen können hergestellt werden, indem der Stabilisator in Form eines Pulvers, Kompaktates oder Granulates in Gegenwart der Ölsäure, des Polyglykols und Dispergiermittels und/oder weiterer üblicher Zusatzstoffe dispergiert wird. Das Dispergiermittel und/oder Zusatzstoffe werden vorzugsweise zunächst mit der Ölsäure vermischt, der Stabilisator eingerührt und je nach Kornhärte des eingesetzten Stabilisators mit Rührwerken, Dissolvern, Rotor-Stator-Mühlen, Kugelmühlen, Rührwerkskugelmühlen, wie Sand- und Perlmühlen, Schnellmischern, Knetapparaturen oder Hochleistungsperlmühlen dispergiert. Die erhaltene Präparation wird gegebenenfalls mit Ölsäure weiter verdünnt.

Die erfindungsgemässen hochkonzentrierten, wässrigen Dispersionen werden in wässrigen Lackmassen eingearbeitet, wobei sie in Mengen von 0,3 bis 3 Gew.% der Gesamtrezeptur eingesetzt werden und mit allen bekannten Bindemittel-Systemen kompatibel sind. Beispiele solcher Systeme sind wässrige Dispersionen, wässrige Emulsionen oder wässrige Lösungen eines Bindemittels auf der Basis von vernetzbarem Alkyd-Harz, Acryl-Harz, Polyester-Harz oder Polyurethan-Harz.

In den nachfolgenden Beispielen werden folgende Produkte eingesetzt:

| | |
|---|---|
| UVA 1 = Tinuvin^{®} 326 | 2-(2'-Hydroxy-3'-tert.butyl-5'-methylphenyl)-5- chlorobenzotriazol |
| UVA 2 = Tinuvin^{®} P | 2-(2'-Hydroxy-5'-methylphenyl)-benzotriazol |
| UVA 3 = Tinuvin^{®} 328 | 2-(2'-Hydroxy-3',5'-di-tert.amylphenyl)-benzotriazol |
| UVA 4 = Tinuvin^{®} 329 | Bis-[2-hydroxy-5-tert.octyl-3-(benzotriazol-2-yl)- phenyl]-methan |
| UVA 5 = Cyasorb^{®} 1164 P | 2-[4,6-Bis(2,4-dimethylphenyl)-1,3,5-triazin-2-yl]-5- (octyloxy)phenol |
| UVA 6 = Tinuvin^{®} 4.05 | 2-[4,6-bis(2,4-dimethylphenyl)-1,3,5-triazin-2-yl]-5- [3-[(2-ethylhexyl)oxy]-2-hydroxypropoxy] phenol |
| UVA 7 = Tinuvin^{®} 1577 | 2-(4,6-Diphenyl-1,3,5-triazin-2-yl)-5-hexyloxyphenol |
| UVA 8 = Sanduvor^{®} 3041 | 2-Hydroxy-4-methoxybenzophenon |
| UVA 9 = Uvinul^{®} 3040 | 2,2'-Dihydroxy-4-methoxybenzophenon |
| UVA 10 = Sanduvor^{®} 3035 | 2-Hydroxy-4-n-octytoxybenzophenon |
| UVA 11 = Sanduvor^{®} VSU | N-(2-Ethoxyphenyl)-N'-(2-ethylphenyl)-ethandiamid |
| UVA 12 = Sanduvor^{®} EPU | N-(2-Ethoxy-5-tert.butylphenyl)-N'-(2-ethylphenyl)- ethandiamid |
| UVA 13 = Cyasorb^{®} UV-3638 | 2,2'-(1,4-Phenylen)bis[4H-3,1-benzoxazin-4-on] |
| UVA 14 | Zimtsäuremethylester |
| UVA 15 = Uvinul^{®} 3035 | Ethyl-2-cyan-3,3-diphenylacrylat |
| UVA 16 = Hostavin^{®} B-CAP | Tetraethyl-2,2'-(1,4-phenylen-dimethyliden)-bis- malonat |
| UVA 17 = Cyasorb^{®} UV-3346 | Poly[(6-morpholino-s-triazine-2,4-diyl)[2,2,6,6-tetra- methyl-4-piperidyl)imino]-hexamethylene[(2,2,6,6- tetramethyl-4-piperidyl)imino]] |
| HALS 1 = Tinuvin^{®} 770 | Bis-(2,2,6,6-tetramethyl-4-piperidyl)-sebacat |
| HALS 2 = Tinuvin^{®} 144 | Bis(1,2,2,6,6-pentamethyl-4-piperidyl)(3,5-di-tert.- butyl-4-hydroxybenzyl)butylpropandioat |
| HALS 3 = Sanduvor^{®} PR-31 | Propanedioic acid, [(4-methoxyphenyl)-methylene]-, bis(1,2,2,6,6-pentamethyl-4-piperidinyl)ester |
| HALS 4 = Sanduvor^{®} 3051 | 2,2,4,4-tetramethyl-7-oxa-3,20-diaza-dispiro- {5.1.11.2]heneicosan-21-on |
| HALS 5 = Hostavin^{®} N30 | Polymer aus der Reaktion von 2,2,4,4-Tetramethyl- 7-oxa-3,20-diaza-dispiro{5.1.11.2]heneicosan-21-on mit Epichlorhydrin |
| HALS 6 = Chimassorb^{o} 944 | Poly[(6-isooctylamino-s-triazine-2,4-diyl)[2,2,6,6- tetramethyl-4-piperidyl)imino]- hexamethylene[(2,2,6,6- tetramethyl-4-piperidyl)- imino]] |
| HALS 7 = Chimassorb^{®} 119 | 1,3,5-Triazine-2,4,6-triamine,N,N"'-[1,2-ethanediyl- bis[[[4,6-bis-[butyl(1,2,2,6,6-pentamethyl-4-piperidinyl)amino]-1,3,5-triazine-2-yl]imino]-3,1-propane- diyl]]bis[N',N"-dibutyl-N',N"-bis(1,2,2,6,6-penta- methyl-4-piperidinyl)- |
| HALS 8 | 4-Hydroxy-2,2,6,6-tetramethylpiperidinyl-1-oxy |
| Dispergator-Mischung M1 | Oleyl-8-ethoxylat + Tetranatrium-N-(1,2-dicarboxy- ethyl)-N-octadecylsulfosuccinamat |
| Dispergator-Mischung M2 | Oleyl-10-ethoxylat + Tetranatrium-N-(1,2-dicarboxy- ethyl)-N-octadecylsulfosuccinamat |

Als Polyglykol wird ein Polyethylenglykolmonomethylether mit einer mittleren Masse im Bereich 470-530 g/mol eingesetzt.

### BEISPIEL 1

In einer Vertikalmühle werden

| | |
|---|---|
| 10 | Teilen Polyglykol |
| 8.5 | Teilen einer Dispergator-Mischung M1 |
| 1.0 | Teilen Ölsäure und |
| 0.2 | Teilen eines Biozids in 32.3 Teilen Wasser gemischt. |

Alsdann werden 48 Teile UVA 1 hinzugefügt und wird die Mischung mit Glasperlen (Durchmesser 1 mm) 5-6 Stunden gemahlen, bis die Partikelgrösse < 5 µm ist. Die so erhaltene Dispersion wird durch Filtration von den Perlen abgetrennt. Man erhält eine lagerstabile Dispersion (Viskosität 1.0 Pas).

### BEISPIEL 2

Nach dem gleichen Verfahren werden

| | |
|---|---|
| 20 | Teilen Polyglykol |
| 6 | Teilen Dispergator-Mischung M2 |
| 1.0 | Teilen Ölsäure und |
| 0.2 | Teilen eines Biozids in 24.8 Teilen Wasser gemischt und 48 Teile UVA 1 |

hinzugefügt. Man erhält eine lagerstabile Dispersion (Viskosität 1.8 Pas).

### BEISPIEL 3

Nach dem gleichen Verfahren werden

| | |
|---|---|
| 5 | Teilen Polyglykol |
| 6 | Teilen Dispergator-Mischung M2 |
| 1.0 | Teilen Ölsäure und |
| 0.2 | Teilen eines Biozids in 39.8 Teilen Wasser gemischt und 48 Teile UVA 1 |

hinzugefügt. Man erhält eine lagerstabile Dispersion (Viskosität 0.8 Pas).

### BEISPIEL 4

Nach dem gleichen Verfahren werden

| | |
|---|---|
| 10 | Teilen Polyglykol |
| 6 | Teilen Dispergator-Mischung M2 |
| 1.0 | Teilen Ölsäure und |
| 0.2 | Teilen eines Biozids in 30.8 Teilen Wasser gemischt und 52 Teile UVA 2 |

hinzugefügt. Man erhält eine lagerstabile Dispersion (Viskosität 0.7 Pas).

### BEISPIEL 5

Nach dem gleichen Verfahren werden

| | |
|---|---|
| 5 | Teilen Polyglykol |
| 6 | Teilen Dispergator-Mischung M2 |
| 1.0 | Teilen Ölsäure und |
| 0.2 | Teilen eines Biozids in 39.8 Teilen Wasser gemischt und 48 Teile UVA 3 |

hinzugefügt. Man erhält eine lagerstabile Dispersion (Viskosität 0.2 Pas).

### BEISPIEL 6

Nach dem gleichen Verfahren werden

| | |
|---|---|
| 5 | Teilen Polyglykol |
| 6 | Teilen Dispergator-Mischung M2 |
| 1.0 | Teilen Ölsäure und |

| | |
|---|---|
| 0.2 | Teilen eines Biozids in 37.8 Teilen Wasser gemischt und 50 Teile UVA 4 hinzugefügt. Man erhält eine lagerstabile Dispersion (Viskosität 0.4 Pas). |

### BEISPIELE 7 - 28

Nach dem gleichen Verfahren werden entsprechend Beispiel 3 resp. 5 jeweils

| | |
|---|---|
| 5 | Teilen Polyglykol |
| 6 | Teilen Dispergator-Mischung M2 |
| 1.0 | Teilen Ölsäure und |
| 0.2 | Teilen eines Biozids |

in 37.8 Teilen Wasser gemischt und 48 Teile der folgenden Stabilisatoren hinzugefügt:
Beispiel 7 UVA 5
Beispiel 8 UVA 6
Beispiel 9 UVA 7
Beispiel 10 UVA 8
Beispiel 11 UVA 9
Beispiel 12 UVA 10
Beispiel 13 UVA 11
Beispiel 14 UVA 12
Beispiel 15 UVA 13
Beispiel 16 UVA 14
Beispiel 17 UVA 15
Beispiel 18 UVA 16
Beispiel 19 HALS 1
Beispiel 20 HALS 2
Beispiel 21 HALS 3
Beispiel 22 HALS 4
Beispiel 23 HALS 5
Beispiel 24 HALS 6
Beispiel 25 HALS 7
Beispiel 26 UVA 17
Beispiel 27 HALS 4 + HALS 8
Beispiel 28 HALS 4 + UVA 11

### NACHWEIS DER VERBESSERTEN LAGERSTABILITÄT

Je ein Muster der nach DE-OS 3511924 Beispiel 1 und Beispiel 2 dargestellten Dispersionen werden mit den Dispersionen nach den vorher beschriebenen Beispielen 22 bzw. 27 bezüglich deren Lagerstabilitäten bei Raumtemperatur und 50°C geprüft. Als Mass für die Stabilität gilt die Zeit, nach welcher das Absetzen der Produkte beginnt:

| | **Lagerung bei Raumtemperatur** | **Lagerung bei 50°C** |
|---|---|---|
| DE-OS 3511924 Beispiel 1 (Aktivstoffgehalt 32 Gew%) | 8-9 Wochen | 6 Wochen |
| Beispiel 22 (Aktivstoffgehalt 48 Gew%) | 22 Wochen | 18-19 Wochen |
| DE-OS 3511924 Beispiel 2 (Aktivstoffgehalt 32 Gew%) | 12 Wochen | 8-9 Wochen |
| Beispiel 27 (Aktivstoffgehalt 48 Gew%) | 24 Wochen | 20 Wochen |

### NACHWEIS DER VERBESSERTEN LAGERSTABILITÄT DURCH ZUGABE EINES BIOZIDS

Beispiele 1 bis 6 werden wiederholt ohne dass ein Biozid-Anteils in der Rezeptur enthalten ist (Beispiele 1a bis 6a).

Nach 6 monatiger Lagerung bei Raumtemperatur werden die Muster auf Pilz- und Bakterienbefall untersucht.

Das verwendete Testsystem ist von der Firma Biotest Diagnostics GK-T/HS, welches die gleichzeitige Bestimmung der Gesamtkeimzahl/TTC auf der einen Seite und der Hefen und Schimmelpilze auf der anderen Seite zulässt. Die Dispersionen werden dazu langsam über beide Seiten der Indikatorenflächen getropft so daß die Flächen benetzt sind oder sie werden mit einer sterilen Impföse welche in die Dispersionen eingetaucht werden bestrichen. Anschliessend werden die Röhrchen verschlossen und im Brutschrank bei 30-35°C 3-5 Tage bebrütet. Die Auswertung der Indikatoren erfolgt gemäss der jeder Packung beiliegenden Anleitung durch Vergleich. Sind nach der entsprechenden Brutzeit mehr als 10² KBE/ml (KBE = Kolonienbildende Einheiten) vorhanden, so ist eine starke Kontamination der Dispersion gegeben welche einen stark negativen Einfluß auf die weitere Lagerstabilität der Dispersion haben kann (Abbau des Dispergators).

| Mit Biozid | KBE | Ohne Biozid | KBE |
|---|---|---|---|
| Beispiel 1 | < 10² | Beispiel 1a | >= 10⁵ |
| Beispiel 2 | < 10² | Beispiel 2a | > 10⁴ |
| Beispiel 3 | < 10² | Beispiel 3a | > 10³ |
| Beispiel 4 | < 10² | Beispiel 4a | > 10³ |
| Beispiel 5 | < 10² | Beispiel 5a | > 10⁴ |
| Beispiel 6 | < 10² | Beispiel 6a | > 10³ |

### APPLIKATIONSBEISPIEL

Ein auf Wasser basierendes Harzsystem bestehend aus einer Styrol-modifizierten Acrylat-Emulsion wird folgendermassen hergestellt: Eine Mischung bestehend aus

| | |
|---|---|
| 106.0 | Teile Butylglycol und |
| 132.1 | Teilen entmineralisiertes Wasser |

wird unter gutem Rühren langsam zu

| | |
|---|---|
| 761.9 | Teilen Neocryl^{®} XK-62 (Avecia) |

zugegeben.

Dieses System dient in den weiteren Versuchen als Basismaterial zur Prüfung der in den Beispielen genannten Dispersionen z. B. bezüglich Klarlöslichkeit, was auf eine gute Kompatibilität und Verteilung schliessen lässt.

Die so stabilisierten "Lacke"werden mit einer Rakel (Filmbreite 80 mm) mit 100 µm Nassfilmdicke auf hochtransparenten Polyesterfolien und/oder mattschwarz pigmentierten LENETA-Charts aufgetragen und bei 50°C und 80°C im Umluftofen getrocknet. Anschliessend werden die Polyesterfolien auf Transparenz begutachtet, die LENETA-Charts hinsichtlich eventuell auftretendes Ausblühverhalten, was einen Hinweis auf Inkompatibilität und Sättigung im Lack darstellt.

### APPLIKATION IN EINEM WÄSSRIGEN 2K-PUR KLARLACK FÜR OEM-ANWENDUNGEN

Die Polyol-Komponente wird auf Basis der folgenden Bestandteile zusammengesetzt.

| | | |
|---|---|---|
| Bayhydrol^{®} VP LS 2271 | 28.33 | (Bayer) |
| Bayhydrol^{®} VP LS 2231 | 31.03 | (Bayer) |
| Byk^{®} 345 Lieferform | 0.29 | (Byk Chemie) |
| Byk^{®} 333 25%-ig in Wasser | 0.28 | (Byk Chemie) |
| Dest. Wasser | 12.86 | |

Die Polyolkomponente wird intensiv per Hand oder Schnellrührer (1000 rpm) verrührt. Das Vermischen der Einzelbestandteile sollte in der vorgegebenen Reihenfolge geschehen.

### HÄRTERKOMPONENTE

| | | |
|---|---|---|
| Desmodur^{®} N 3600 | 17.28 | (Bayer) |
| Butylglycolacetat / Solvesso^{®} 100 (1 : 1) | 7.33 | (Exxon Mobile) |

Die in den Beispielen beschriebenen Dispersionen werden vor der Vermischung mit der Härterkomponente zur Polyolkomponente gegeben. Dazu sollte die Vermischung mit der Härterkomponente frühestens 12 Stunden nach der Herstellung der Polyolkomponente erfolgen. Die Vermischung der Polyolkomponente mit der Härterkomponente erfolgt in 2 Schritten:
1) durch Herstellung einer Voremulsion durch Verrühren der Komponenten per Hand oder
2) Laborrührer

Die Endvermischung erfolgt durch Strahldispergierung bei 50 bar (z. B. Airlesspumpe Merkur 060.020-DP F, Fa. Walther/Wuppertal) oder mit Hilfe eines Dispermaten (5 min bei 2000 rpm).

Vergleichsversuche durch Zugabe flüssiger HALS-Stabilisatoren auf Basis von Butylgykol zur Harzlösung:

| | |
|---|---|
| Tinuvin^{®} 292 (Ciba) | starkes gelieren nach kurzer Zeit |
| Sanduvor^{®} 3052 (Clariant) | starkes gelieren nach kurzer Zeit |

### APPLIKATION IN EINEM SOFTFEEL-LACK

Der Softfeel-Lack wird wie folgt hergestellt:

| **Position** | **Rohmaterial** | **Menge** | **Beschreibung** |
|---|---|---|---|
| 1 | CUR 21 | 54.70 | Bindemittel (Alberdingk-Boley) |
| 2 | Byk 024 | 0.60 | Entschäumer (Byk Chemie) |
| 3 | Dow Corning 67 | 0.40 | Netzmittel (Dow Corning) |
| 4 | Byk 044 | 0.20 | Entschäumer (Byk Chemie) |
| 5 | Worlée-Pol 1181/03 | 5.00 | Polyester (Worlée) |
| 6a | Butylglycol* | 3.50 | Lösungsmittel (BASF) |
| 6b | Wasser* | 30.00 | Lösungsmittel |
| 7 | Acematt TS-1 00 | 1.50 | Mattierungsmittel (Degussa) |
| 8 | DSX 1514 | 0.10 | Rheologie Additiv (Cognis) |
| 9 | Colanyl schwarz N230 | 4.00 | Pigmentpräparation (Clariant) |
| | | 100.00 | |

| | | | |
|---|---|---|---|
| = Vor dem Einsatz mischen! | | | |

Zu diesem Lack werden 0.5 Gew.% der oben beschriebenen Dispersionen zugegeben. Die so stabilisierten "Lacke" werden mit einer Rakel (Filmbreite 80 mm) mit 100 µm Nassfilmdicke auf hochtransparenten Polyesterfolien aufgetragen und bei Raumtemperatur und bei 50°C im Umluftofen getrocknet. Anschliessend werden die Polyesterfolien auf Transparenz geprüft.

## Patentansprüche

1. Hochkonzentrierte, lagerstabile wässrige Dispersionen eines Lichtschutzmittels oder eines Gemisches eines Lichtschutzmittels und eines Antioxidants, **dadurch gekennzeichnet, dass** sie einen Aktivstoffgehalt von mehr als 47 Gew.% aufweisen und zumindest ein nichtionisches Netzmittel als Dispergator und ein Polyglykol als Lösungsvermittler, sowie 0,2 bis 5 Gew.% Ölsäure als Fliessverbesserer enthalten.

2. Wässrige Dispersionen gemäss Anspruch 1, wobei das Lichtschutzmittel oder das Gemisch eines Lichtschutzmittels und eines Antioxidants einen Schmelzpunkt von mindestens 35°C aufweist.

3. Wässrige Dispersionen gemäss Ansprüche 1 oder 2, wobei der Aktivstoffgehalt 47-57 Gew.% beträgt.

4. Wässrige Dispersionen gemäss Ansprüchen 1, 2 oder 3, wobei diese eine Viskosität von 0,01 bis 2 Pa s aufweisen.

5. Wässrige Dispersionen gemäss Ansprüche 1 bis 4, die neben den nichtionischen Netzmittel ein anionisches Netzmittel enthalten.

6. Wässrige Dispersionen gemäss Ansprüche 1 bis 5, worin die Aktivstoffe eine Partikelgrösse von D₅₀ < 5 µm aufweisen, bevorzugt von D₅₀ = 0,5-2 µm und D₉₀ < 3,5 µm aufweisen.

7. Wässrige Dispersionen gemäss Ansprüche 1 bis 6 mit einer Lagerstabilität von mehr als 4 Wochen bei 50° C.

8. Wässrige Dispersionen gemäss Ansprüche 1 bis 7 **dadurch gekennzeichnet, dass** sie als weitere Komponente ein Biozid enthalten.

9. Wässrige Dispersionen gemäss Anspruche 1 bis 7 mit einem Gehalt von 47-54 Gew.% Aktivstoff,
5-10 Gew.% Netzmittel (als Dispergator),
5-10 Gew.% Polyglykol (als Lösungsvermittler),
0,2-3 Gew.% Ölsäure (als Fliessverbesserer),
< 1 Gew.% Biozide
in 30-40 Gew.% Wasser.

10. Verfahren zur Verbesserung der Lagerstabilität von wässrigen Dispersionen eines Lichtschutzmittels oder eines Gemisches eines Lichtschutzmittels und eines Antioxidants, **dadurch gekennzeichnet, dass** in einem ersten Schritt ein Dispergiermittel und/oder weitere Zusatzstoffe mit Ölsäure vermischt werden und in einem zweiten Schritt das Lichtschutzmittel oder das Gemisch eines Lichtschutzmittels und eines Antioxidants, in Form eines Pulvers, Kompaktates oder Granulates zugegeben wird und dann in Gegenwart der Ölsäure, des Dispergiermittels und eines Polyglykols, sowie eventuell weiteren Zusatzstoffe dispergiert wird.

11. Verwendung der wässrigen Dispersionen gemäss einem der vorhergehenden Ansprüche 1 bis 9, bei der Herstellung von Lackmassen.

12. Lackmassen, in Form einer wässrigen Dispersion, die eine wässrige Dispersion gemäss einem der Ansprüche 1 bis 9 und eine wässrige Dispersion, eine wässrige Emulsion oder eine wässrige Lösung eines Bindemittels auf der Basis von vernetzbarem Alkyd-Harz, Acryl-Harz, Polyester-Harz oder Polyurethan-Harz enthalten.

## Claims

1. A highly concentrated, storage stable aqueous dispersion of a light stabilizer or of a mixture of a light stabilizer and an antioxidant, **characterized in that** it has an active substance content of more than 47% by weight and comprises at least one nonionic wetting agent as dispersant and a polyglycol as solubilizer, and also 0.2% to 5% by weight of oleic acid as flow improver.

2. The aqueous dispersion of claim 1, wherein the light stabilizer or the mixture of a light stabilizer and an antioxidant has a melting point of at least 35°C.

3. The aqueous dispersion of claim 1 or 2, wherein the active substance content amounts to 47%-57% by weight.

4. The aqueous dispersion of claim 1, 2 or 3, which has a viscosity of 0.01 to 2 Pa s.

5. The aqueous dispersion of claims 1 to 4, which besides the nonionic wetting agent comprises an anionic wetting agent.

6. The aqueous dispersion of claims 1 to 5, wherein the active substances have a particle size of D₅₀ < 5 µm, preferably of D₅₀ = 0.5-2 µm and D₉₀ < 3.5 µm.

7. The aqueous dispersion of claims 1 to 6, having a storage stability of more than 4 weeks at 50°C.

8. The aqueous dispersion of claims 1 to 7, **characterized in that** it comprises a biocide as a further component.

9. The aqueous dispersion of claims 1 to 7, containing
47%-54% by weight active substance,
5%-10% by weight wetting agents (as dispersant),
5%-10% by weight polyglycol (as solubilizer),
0.2%-3% by weight oleic acid (as flow improver),
< 1% by weight biocides
in 30%-40% by weight water.

10. A method of improving the storage stability of an aqueous dispersion of a light stabilizer or of a mixture of a light stabilizer and an antioxidant, **characterized in that** in a first step a dispersant and/or further additives are mixed with oleic acid and in a second step the light stabilizer or the mixture of a light stabilizer and an antioxidant, in the form of a powder, compact or granules, is added and then dispersed in the presence of the oleic acid, the dispersant, and a polyglycol, and also any further additives.

11. The use of an aqueous dispersion of any one of claims 1 to 9 above in the preparation of coating compositions.

12. A coating composition in the form of an aqueous dispersion which comprises an aqueous dispersion of any one of claims 1 to 9 and an aqueous dispersion, an aqueous emulsion or an aqueous solution of a binder based on crosslinkable alkyd resin, acrylic resin, polyester resin or polyurethane resin.

## Revendications

1. Dispersions aqueuses, stables à l'entreposage, hautement concentrées d'un agent de protection contre la lumière ou d'un mélange d'un agent de protection contre la lumière et d'un antioxydant, **caractérisées en ce qu'**elles contiennent une teneur en substances actives supérieure à 47% en poids et au moins un mouillant non ionique comme dispersant et un polyglycol comme promoteur de solubilisation, ainsi que 0,2 à 5% en poids d'acide oléique comme agent d'amélioration de l'écoulement.

2. Dispersions aqueuses selon la revendication 1, où l'agent de protection contre la lumière ou le mélange d'un agent de protection contre la lumière et d'un antioxydant présente un point de fusion d'au moins 35°C.

3. Dispersions aqueuses selon les revendications 1 ou 2, où la teneur en substances actives est de 47-57% en poids.

4. Dispersions aqueuses selon les revendications 1, 2 ou 3, où celles-ci présentent une viscosité de 0,01 à 2 Pa.s.

5. Dispersions aqueuses selon les revendications 1 à 4, qui contiennent, outre le mouillant non ionique, un mouillant anionique.

6. Dispersions aqueuses selon les revendications 1 à 5, où les substances actives présentent une grosseur de particules D₅₀ < 5 µm, de préférence D₅₀ = 0,5-2 µm et D₉₀ < 3, 5 µm.

7. Dispersions aqueuses selon les revendications 1 à 6 présentant une stabilité à l'entreposage supérieure à 4 semaines à 50°C.

8. Dispersions aqueuses selon les revendications 1 à 7, **caractérisées**
**en ce qu'**elles contiennent un biocide comme autre composant.

9. Dispersions aqueuses selon les revendications 1 à 7 présentant une teneur de
47-54% en poids de substance active,
5-10% en poids de mouillant (comme dispersant),
5-10% en poids de polyglycol (comme promoteur de solubilisation),
0,2-3% en poids d'acide oléique (comme agent d'amélioration de l'écoulement),
< 1% en poids de biocides
dans 30-40% en poids d'eau.

10. Procédé pour améliorer la stabilité à l'entreposage de dispersions aqueuses d'un agent de protection contre la lumière ou d'un mélange d'un agent de protection contre la lumière et d'un antioxydant, **caractérisé**
**en ce qu'**on mélange, dans une première étape, un dispersant et/ou d'autres additifs avec de l'acide oléique et on ajoute, dans une deuxième étape, l'agent de protection contre la lumière ou le mélange d'un agent de protection contre la lumière et d'un antioxydant, sous forme d'une poudre, d'un produit compacté ou d'un granulat puis on disperse en présence de l'acide oléique, du dispersant et d'un polyglycol ainsi qu'éventuellement d'autres additifs.

11. Utilisation des dispersions aqueuses selon l'une quelconque des revendications précédentes 1 à 9, lors de la préparation de masses de laque.

12. Masses de laque, sous forme d'une dispersion aqueuse, qui contiennent une dispersion aqueuse selon l'une quelconque des revendications 1 à 9 et une dispersion aqueuse, une émulsion aqueuse ou une solution aqueuse d'un liant à base d'une résine alkyle, acryle, polyester ou polyuréthane réticulable.
